Europäisches Patentamt

European Patent Office

Office européen des brevets

(19)

(11) **EP 1 666 558 A1**

(12) **EUROPEAN PATENT APPLICATION**
published in accordance with Art. 158(3) EPC

(43) Date of publication:
**07.06.2006 Bulletin 2006/23**

(51) Int Cl.:
*C09K 3/00* (1968.09)  *C09D 7/12* (1968.09)
*C09D 201/00* (1990.01)  *C09J 11/02* (1990.01)
*C09J 201/00* (1990.01)  *C08L 101/00* (1985.01)
*C08K 3/18* (1990.01)

(21) Application number: **04747081.0**

(22) Date of filing: **30.06.2004**

(86) International application number:
**PCT/JP2004/009612**

(87) International publication number:
**WO 2005/007768 (27.01.2005 Gazette 2005/04)**

(84) Designated Contracting States:
**AT BE BG CH CY CZ DE DK EE ES FI FR GB GR
HU IE IT LI LU MC NL PL PT RO SE SI SK TR**

(30) Priority: **17.07.2003 JP 2003275766**

(71) Applicant: **Mizusawa Industrial Chemicals Ltd.
Tokyo 103-0022 (JP)**

(72) Inventors:
 • **UENO, Toru,
  c/o Mizusawa Industrial Chemicals, Ltd
  Tokyo 1030022 (JP)**

 • **NAKAJIMA, Michiyuki,
  Mizusawa Ind. Chemicals, Ltd.
  Tokyo 1030022 (JP)**
 • **SAKAO, Kazunori,
  Mizusawa Industrial Chemicals Ltd
  Tokyo 1030022 (JP)**

(74) Representative: **Cresswell, Thomas Anthony
J.A. KEMP & CO.
14 South Square
Gray's Inn
London WC1R 5JJ (GB)**

(54) **THIXOTROPY IMPARTING AGENT**

(57)  A thixotropy-imparting agent comprises chain clay mineral particles which have a thixotropic index (TI) of not smaller than 4.0 in a dispersion solution obtained by dispersing chain clay mineral particles at a concentration of 7% by weight in diethylhexyl phthalate (DOP) as a dispersing medium and not smaller than 3.0 in a dispersion solution obtained by dispersing chain clay mineral particles at a concentration of 3% by weight in water as a dispersion medium, and have a bulk density of not larger than 0.125 g/ml, and a particle size distribution of secondary particles as measured by a laser method, in which particle sizes of larger than 1.0 $\mu$m but not larger than 30$\mu$m are not less than 70% by weight and particle sizes of not larger than 1.0 $\mu$m are in a range of 5 to 30% by weight.

EP 1 666 558 A1

**Description**

(Technical Field)

The present invention relates to a thixotropy-imparting agent. More particularly, the invention relates to a highly thixotropy-imparting agent comprising chain clay mineral particles and having a particularly large thixotropic index.

(Background Art)

In the field of coating materials, it is a requirement that a suppressed viscosity is exhibited at the time of preparing the coating materials (at the time of mixing the components) and at the time of applying the coating materials from the standpoint of workability. For this purpose, therefore, a thixotropy-imparting agent is used to lower the viscosity under the conditions of high shearing forces. After having been applied, on the other hand, a high viscosity must be exhibited to prevent dripping calling for a high thixotropy with a large thixotropic index (TI).

The chain clay minerals (holmite) such as sepiolite and attapulgite have a three-dimensional chain structure like alternately piling talc bricks. It has been known that holes formed among the chain gaps possess large surface areas serving as a factor that produce a high viscosity or thixotropy when the chain clay mineral is obtained in a slurry form, exhibiting, for example, thixotropy and rheopexy (see JP-A-4-228461).

However, the chain clay minerals such as the sepiolite and the like that are naturally produced contain impurities that differ depending upon the region of production; i.e., the chain clay minerals do not all have large thixotropic indexes (TI). Therefore, it has been desired to provide an agent capable of imparting a high degree of thixotropy maintaining stability.

(Disclosure of the Invention)

It is, therefore, an object of the present invention to provide a highly thixotropy-imparting agent comprising chain clay mineral particles and having a large thixotropic index.

According to the present invention, there is provided a thixotropy-imparting agent comprising chain clay mineral particles, characterized in that said chain clay mineral particles has:

a thixotropic index (TI) defined by the following formula,

$$TI = \eta_6 / \eta_{60}$$

wherein $\eta_6$ is a viscosity (at 25°C) of a dispersion solution obtained by dispersing the chain clay mineral particles in a predetermined dispersion medium as measured at a rotational speed of 6 rpm, and $\eta_{60}$ is a viscosity (at 25°C) of the above dispersion solution as measured at a rotational speed of 60 rpm, of not smaller than 4.0 in a dispersion solution obtained by dispersing chain clay mineral particles at a concentration of 7% by weight in diethylhexyl phthalate (DOP) as a dispersing medium and not smaller than 3.0 in a dispersion solution obtained by dispersing chain clay mineral particles at a concentration of 3% by weight in water as a dispersion medium;

a bulk density of not larger than 0.125 g/ml; and

a particle size distribution of secondary particles as measured by a laser method, in which particle sizes of larger than 1.0 μm but not larger than 30 μm are not less than 70% by weight and particle sizes of not larger than 1.0 μm are in a range of 5 to 30% by weight.

According to the present invention, there are further provided a coating material composition, an adhesive composition and a resin composition containing the above thixotropy-imparting agent.

In the thixotropy-imparting agent of the present invention, it is desired that:

1. the chain clay mineral particles have an average aspect ratio of 7.5 to 9.5;
2. the chain clay mineral particles are such that a primary particle shape thereof has an average fiber length of 0.45 to 0.80 μm as measured by using an electron microscope;
3. the chain clay mineral is holmite clay mineral;
4. the holmite clay mineral is sepiolite or attapulgite;
5. the holmite clay mineral is sepiolite, and when the peak height stemming from the plane (110) of sepiolite is regarded to be 100%, the peaks stemming from dolomite and calcite have intensity ratios of peaks of not larger than 25% in the X-ray diffraction measurement;

6. the holmite clay mineral is attapulgite, and when the peak height stemming from the plane (110) of attapulgite is regarded to be 100%, the peak stemming from calcite has an intensity ratio of peak of not larger than 50%.

According to the present invention, a high thixotropy having a large thixotropic index can be imparted to the coating materials by using particular chain clay mineral particles.

(Brief Description of the Drawings)

Fig. 1 is a diagram showing X-ray diffraction images of sepiolites of Example 1 and of Comparative Examples 3 and 4;

Fig. 2 is a diagram showing particle size distributions of secondary particles of a thixotropy-imparting agent of Example 1;

Fig. 3 is a scanning electron microphotograph (SEM) of the thixotropy-imparting agent of Example 1 (magnification: 20,000 times);

Fig. 4 is a scanning electron microphotograph (SEM) of a sample of Comparative Example 4 (magnification: 20,000 times); and

Fig. 5 is a diagram showing X-ray diffraction images of attapulgites of Example 3 and of Comparative Example 5.

(Best Mode for Carrying Out the Invention)

(Chain clay minerals)

If briefly described, it is important in the present invention to use chain clay mineral particles having a particular primary particle shape and a particle size distribution. More preferably, the present invention is based on a novel discovery that by using chain clay mineral particles having a particular X-ray diffraction peak and by adjusting the particle size, a high degree of thixotropy can be imparted as compared to that of using the conventional agents.

Representative examples of the chain clay minerals used in the present invention include sepiolite, attapulgite and palygorskite which are holmite clay minerals. These chain clay minerals are the hydrated silicates of magnesium. For example, sepiolite is generally produced in the serpentine as a secondary mineral, and attapulgite is produced being altered from the augite and hornblende in the aqueous rock. Attapulgite is often called palygorskite depending upon the use or the region of production.

Sepiolite ideally has a chemical structure represented by the following formula (I),

$$(OH_2)_4(OH)_4Mg_8Si_{12}O_{30} \cdot 6\text{-}8\ H_2O \qquad (I)$$

and, when generally calculated, has the following representative composition (when dried at 110°C for 2 hours).

General chemical composition of sepiolite:

| | | |
|---|---|---|
| $SiO_2$ | 52.50 | (% by weight) |
| $MgO$ | 22.8 | |
| $Al_2O_3$ | 1.7 | |
| $Fe_2O_3$ | 0.8 | |
| $CaO$ | 0.8 | |
| $H_2O^+$ | 10.5 | |
| $H_2O^-$ | 11.0 | |

Ideally, further, attapulgite has a chemical structure represented by the following formula (II),

$$(OH_2)_4(OH)_2Mg_5Si_8O_{20} \cdot 4H_2O \qquad (II)$$

and, when generally calculated, has the following chemical composition (when dried at 110°C for 2 hours).

General chemical composition of attapulgite:

| SiO$_2$ | 57.6 | (% by weight) |
|---|---|---|
| MgO | 22.3 | |
| Al$_2$O$_3$ | 0.9 | |
| Fe$_2$O$_3$ | 0.8 | |
| CaO | 0.5 | |
| H$_2$O$^+$ | 9.9 | |
| H$_2$O$^-$ | 8.0 | |

In the present invention, it is particularly desired to use sepiolite among the above chain clay minerals. That is, the thixotropy can be evaluated in terms of the thixotropic index (TI) defined by the following formula,

$$TI = \eta_6 / \eta_{60}$$

wherein $\eta_6$ is a viscosity (at 25°C) of a dispersion solution obtained by dispersing the above chain clay mineral particles in a predetermined dispersion medium as measured at a rotational speed of 6 rpm, and $\eta_{60}$ is a viscosity (at 25°C) of the above dispersion solution as measured at a rotational speed of 60 rpm, and the higher the thixotropic index (TI), the higher the thixotropy. Sepiolite has a thixotropic index (TI) of not smaller than 4.0 and, preferably, not smaller than 4.2 in a dispersion solution (clay mineral particle concentration of 70% by weight) using diethylhexyl phthalate (DOP) as a dispersion medium and a thixotopic index (TI) of not smaller than 3.0, preferably, not smaller than 5.0 and, more preferably, not smaller than 7.5 in the water which is used as the dispersion medium, exhibiting a very high thixotropy when blended in either the organic dispersion medium or the water dispersion medium. When compared with sepiolite, on the other hand, attapulgite, usually, exhibits a low thixotropic index (TI) and, particularly, a low thixotropic index in the water dispersion medium. Thus, despite the same chain clay mineral, sepiolite is superior to attapulgite presumably because sepiolite contains water in amounts larger than that of attapulgite accounting for one of the factors.

It is further important that the chain clay mineral used in the present invention has a bulk density of not larger than 0.125 g/ml. When the bulk density becomes greater than the above range, it becomes difficult to uniformly disperse the particles of chain clay mineral and, hence, to obtain thixotropy maintaining stability.

In the present invention, further, it is also important that the chain clay mineral particles has a particle size distribution of secondary particles as measured by a laser method, in which particle sizes of larger than 1.0 $\mu$m but not larger than 30 $\mu$m are not less than 70% by weight and particle sizes of larger than 1.0 $\mu$m are in a range of 5 to 30% by weight. That is, particles having particle sizes of larger than 1.0 $\mu$m but not larger than 30 $\mu$m contribute to increasing the viscosity of the dispersion solution while particles having particle sizes of not larger than 1.0 $\mu$m contribute to decreasing the viscosity. By containing these particles at a suitable ratio, therefore, the viscosity can be lowered under a condition of a large shearing force and a high viscosity can be exhibited under a condition of a small shearing force. When the contents of the above particles are not within the above ranges, the thixotropy drops. It is further desired that there are not substantially contained the particles having particle sizes of not smaller than 50 $\mu$m.

Further, the chain clay mineral that is used should have an average aspect ratio in a range of 7.5 to 9.5 and, particularly, 7.5 to 9.0. It is, further, important that the primary particles have a fibrous shape and should have an average fiber length in a range of 0.45 to 0.80 $\mu$m and, particularly, 0.50 to 0.80 $\mu$m as measured by using an electron microscope. That is, the particles having a long fiber length tend to increase the viscosity of the dispersion solution while the particles having a short fiber length tend to lower the viscosity of the dispersion solution. It is therefore necessary that the average aspect ratio and the fiber length are maintained within the above ranges to maintain a predetermined balance. A satisfactory thixotropy is not exhibited when the average aspect ratio and the fiber length lie outside the above range.

It is further desired that the chain clay mineral used in the present invention contains impurity components in small amounts and, particularly, contains dolomite and calcite in small amounts. Referring, for example, to sepiolite, it is desired that a peak stemming from the dolomite near 2θ = 31 degrees and a peak stemming from calcite near 2θ = 29 degrees have the intensity ratios of peaks of not larger than 25% when a peak height stemming from the plane (110) of sepiolite is regarded to be 100% in the X-ray diffraction measurement.

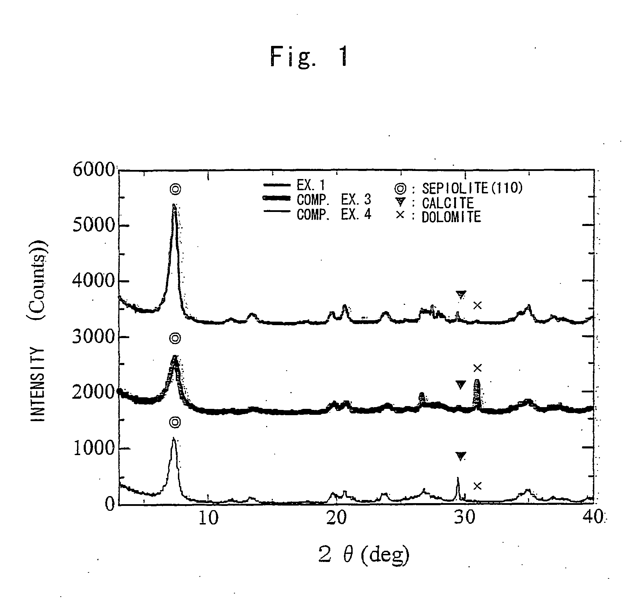

Reference should be made of Fig. 1 showing X-ray diffraction images of sepiolite. Fig. 1 shows X-ray diffraction images of three kinds of sepiolite, wherein Example 1 is that of a produce of Spain containing dolomite and calcite in small amounts, the intensity ratios of peaks (2θ = near 31 degrees, 2θ = near 29 degrees) stemming from dolomite and calcite being not larger than 25% with respect to the peak (2θ = near 7 degrees) stemming from the plane (110) of sepiolite. On the other hand, Comparative Example 3 is that of Spain (different region from that of Example 1) and Comparative Example 4 is that of South Africa containing dolomite and calcite in large amounts, and the intensity ratios of peaks stemming from dolomite and calcite with respect to the peak stemming from the plane (110) of sepiolite being higher than those of Example 1. That is, as will be understood from the experimental results of Examples and Comparative Examples that will be described later, Comparative Examples 3 and 4 containing dolomite and calcite in large amounts exhibit thixotropy indexes (TI) lower than those of Example 1 containing these compounds in small amounts making it difficult to obtain thixotropy as desired.

In the present invention, the chain clay mineral particles are obtained by using the raw material produced from a region where dolomite and calcite are contained in small amounts, finely pulverizing the raw material, and classifying them into predetermined particle sizes. As the pulverizer, there can be used a ball mill, an air pulverizer, a vibration mill, a colloidal mill, a hammer mill or a dyno mill. Among them, it is particularly desired to use an air pulverizer as represented by a jet mill. The pulverization may be carried out by a so-called wet method in the presence of a small amount of water or may be carried out by a dry method without using water. The pulverizing conditions are so set that there can be obtained the above-mentioned average aspect ratio, bulk density, primary particle shape and particle size distribution of the secondary particles. If severe pulverizing conditions are set, for example, the bulk density decreases and the fiber lengths of primary particles are shortened. Therefore, the pulverizing conditions may be suitably set depending upon the properties of the chain clay mineral that is used as the raw material.

Depending upon the region of production, further, sepiolite may contain dolomite or calcite in large amounts. In that case, dolomite and calcite are removed by the treatment with an acid such as hydrochloric acid or nitric acid, so that the intensity ratios of peaks of dolomite and calcite are adjusted to lie in the above-mentioned ranges in the X-ray diffraction.

Attapulgite contains calcite in large amounts making it difficult to satisfy the thixotropic index (TI). In the same manner as above, however, the content of calcite can be decreased by the treatment with an acid such as hydrochloric acid or nitric acid to adjust the intensity ratio of peak stemming from calcite to be not larger than 50% and, preferably, not larger than 30% with respect to the peak stemming from the surface (110) of attapulgite in the X-ray diffraction measurement, and the mechanical treatment is carried out such that the bulk density, average aspect ratio and primary particle size fall within the above-mentioned ranges and that the thixotropic index (TI) lies within the above-mentioned range to express the thixotropy (see Example 3 and Comparative Example 5).

(Thixotropy-imparting agent)

As described above, the thixotropy-imparting agent of the invention comprising the chain clay mineral particles is capable of imparting a high degree of thixotropy when dispersed in either the water or an organic medium, and can be effectively used in the fields of coating materials, adhesives, inks and the like by being blended in the coating materials or adhesives that have been known per se. so as to be used in the form of coating compositions and adhesive compositions.

Examples of the coating material include nitrocellulose coating material, alkyd resin coating material, aminoalkyd coating material, vinyl resin coating material, acrylic resin coating material, epoxy resin coating material, polyester resin coating material, chlorinated rubber coating material, as well as coating materials which contain one or two or more kinds of phenol resin, modified phenol resin, alkyd resin, vinyl resin, petroleum resin, epoxy resin, polyester resin, styrene resin, silicone resin, chlorinated resin, urethane resin, polyamide resin, polyimide resin, and fluorine-contained resin.

Further, the coating material that is used may be either the solvent type or the aqueous type. That is, the thixotropy-imparting agent of the invention exhibits excellent properties even when dispersed in either an organic solvent or an aqueous medium.

As the organic solvent for the solvent type coating materials, there can be used toluene, xylene, n-heptane, n-hexane, cyclohexane, acetone, methyl ethyl ketone, methyl isobutylketone, cyclohexanone ethanol, propanol, butanol, diacetone alcohol tetrahydrofuran, dioxane ethyl cellosolve, butyl cellosolve ethyl acetate, dimethyl sulfoxide, ethanol, methanol, ethylene glycol and glycerin in one kind or in two or more kinds. Among these organic solvents, it is desired to use those having an SP value of not smaller than 10, such as alcohol solvents like cyclohexanone ethanol, propanol, butanol, ethanol, methanol, ethylene glycol or glycerin.

As the aqueous coating material, there can be used a coating material of the type of self emulsion or of the type emulsified with a surfactant in addition to the coating material of the type of aqueous solution. As the resin for the aqueous coating material, there can be used an alkyd resin, a polyester resin, an acrylic resin, an epoxy resin or a combination of two or more kinds of them dissolved in an aqueous medium or self-emulsified. The concentration of the resin is, generally, in a range of 10 to 70% by weight and, particularly, 20 to 60% by weight. The thixotropy-imparting agent of the present invention is usually blended in an amount of 0.1 to 20% by weight per the solid component.

As the adhesive, there can be used epoxy resin adhesive, polyurethane adhesive, urea resin adhesive, melamine resin adhesive, phenol resin adhesive, α-olefin adhesive, aqueous high molecular isocyanate adhesive, vinyl acetate resin (non-solvent type) adhesive, vinyl acetate resin emulsion adhesive, acrylic emulsion adhesive, cyanoacrylate adhesive, hot melt adhesive, aerophobic adhesive, chloroprene rubber adhesive, nitrile rubber adhesive, SBR adhesive, ethylene copolymer resin adhesive, resorcin adhesive, natural rubber adhesive, cellulose adhesive, isobutene/maleic acid copolymer adhesive, alkyd resin adhesive, furan resin adhesive, saturated or non-saturated polyester resin adhesive, silicone resin adhesive, polyvinyl alcohol adhesive, nylon resin adhesive and inorganic adhesive in one kind or in two or more kinds. It is desired that the thixotropy-imparting agent of the present invention is blended in an amount of 0.5 to 30 parts by weight per 100 parts by weight of the adhesive resin.

(EXAMPLES)

The present invention will now be described by way of Examples to which only, however, the invention is not limited. The tests were conducted in compliance with the methods described below.

(1) Measurement of viscosity.

A sample of a predetermined amount was added to a predetermined dispersion medium (water or DOP) in a 500-ml beaker, stirred at 10000 rpm for 3 minutes by using a household juicer to prepare about 300 g of a dispersion solution. The dispersion solution was left to stand still in a water bath at 25 °C for 30 minutes, poured into another 500-ml beaker, and was poured again into the initial beaker (transferred twice). The same transfer operation was further repeated a total of six times. By using a rotary viscometer (Digital Viscometer, Model DVL-BII manufactured by TOKIMEC Co.), the dispersion solution was stirred at a predetermined rotational speed (6 rpm or 60 rpm) for 3 minutes to measure the viscosity.

(2) Thixotropic index (TI).

A thixotropic index (TI) defined by,

$$TI = \eta_6 / \eta_{60}$$

wherein $\eta_6$ is a viscosity (at 25°C) of a dispersion solution obtained by dispersing the above chain clay mineral particles in a predetermined dispersion medium as measured at a rotational speed of 6 rpm, and $\eta_{60}$ is a viscosity (at 25°C) of the above dispersion solution as measured at a rotational speed of 60 rpm,
was measured by using the diethylhexyl phthalate (DOP) and water as dispersion media. When the DOP was used as the dispersion medium, the concentration of the chain clay mineral particles in the dispersion solution was 7% by weight. When water was used as the dispersion medium, the concentration of the chain clay mineral particles in the dispersion solution was 3% by weight.

(3) Bulk density.

Measured in compliance with the JIS K 6721.

(4) Particle size distribution of secondary particles as measured by a laser method.

The particle size distribution was measured by using a laser diffraction particle size analyzer, Model LS- 13 320, manufactured by Beckman Coulter Co.

(5) Average aspect ratio and average fiber length.

By using a scanning electron microscope, S-570, manufactured by Hitachi, Ltd., an average aspect ratio and an average fiber length were arithmetically calculated from five representative particles in an image of a limited visual field.

(6) X-Ray diffraction

Measured with Cu-K$\alpha$ by using a Geiger-Flex RAD-IB System manufactured by Rigaku Denki Co.

| | |
|---|---|
| Target | Cu |
| Filter | curved crystalline graphite monochrometer |

Table continued

| Detector | SC |
| --- | --- |
| Voltage | 40 KVP |
| Current | 20 mA |
| Count full scale | 700 c/s |
| Smoothing point | 25 |
| Scanning speed | 2°/min |
| Step sampling | 0.02° |
| Slit | DS 1° RS 0.15 mm SS 1° |
| Glancing angle | 6° |

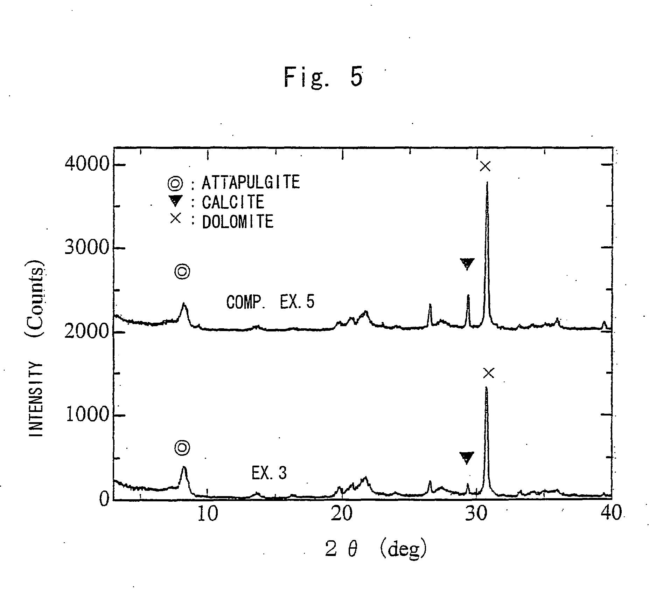

In Examples and Comparative Examples, there were used those sepiolite and attapulgite shown in Table 1. Other properties were as shown in Table 2, and the X-ray diffraction images were as shown in Figs. 1 and 5.

Table 1

| | Sepiolite A | Sepiolite B | Sepiolite C | Attapulgite A | Attapulgite B |
| --- | --- | --- | --- | --- | --- |
| Region of production | Spain | Spain[*1] | South Africa | America | India |
| Intensity ratio of peaks[*2] (%) | | | | | |
| $2\theta=31°$ (dolomite) | 2.0 | 63.7 | 1.0 | 20.4 | 501.1 |
| $2\theta=29°$ (calcite) | 6.3 | 6.3 | 29.4 | 27.1 | 97 |

*1: Region different from the region of sepiolite A.

*2: Intensity ratios of peaks of when the peak height stemming from the planes (110) of the samples are regarded to be 100%.

(Example 1)

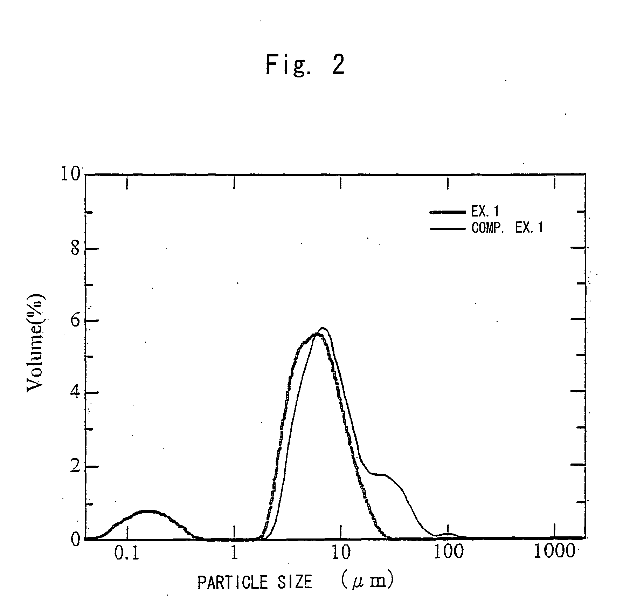

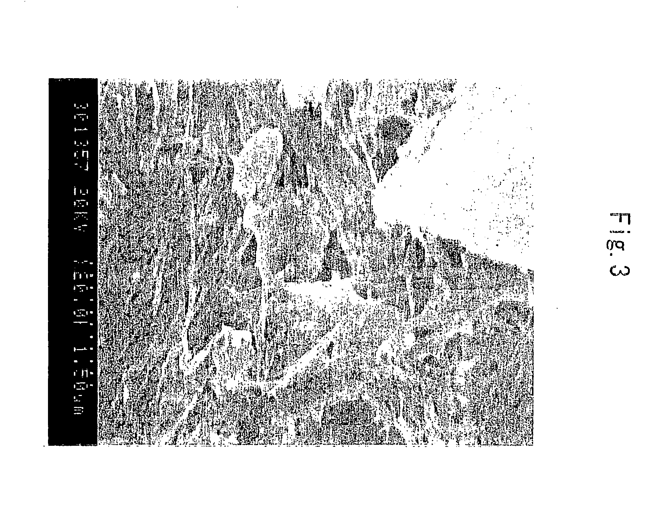

The sepiolite A was coarsely pulverized, pulverized by using a roller mill, and was finely dry-pulverized by using a jet mill (PJM-100SP manufactured by Nihon Pneumatic Kogyo Co.) to obtain a thixotropy-imparting agent. The pulverizing conditions were a pulverizing pressure of 0.65 MPa and a charging amount of 2 kg/hr (the same device and conditions were also employed for the jet mill pulverization in the following Examples and Comparative Examples). The obtained thixotropy-imparting agent was measured for its properties. The results were as shown in Table 2, the X-ray diffraction image was as shown in Fig. 1, the particle size distribution of secondary particles was as shown in Fig. 2, and the SEM photograph was as shown in Fig. 3.

(Comparative Example 1)

The sepiolite A was coasely pulverized, pulverized by using the roller mill and was measured for its properties. The results were as shown in Table 2.

(Example 2)

The attapulgite A was coarsely pulverized, pulverized by using the roller mill, and was finely dry-pulverized by using the jet mill to obtain a thixotropy-imparting agent which was, then, measured for its properties. The results were as shown in Table 2.

(Comparative Example 2)

The attapulgite A was coarsely pulverized and was pulverized by using the roller mill. The pulverized product was measured for its properties. The results were as shown in Table 2.

(Comparative Example 3)

The sepiolite B was coarsely pulverized, pulverized by using the roller mill, and was finely dry-pulverized by using the jet mill. The pulverized product was measured for its properties. The results were as shown in Table 2 and the X-ray diffraction image was as shown in Fig. 1.

(Comparative Example 4)

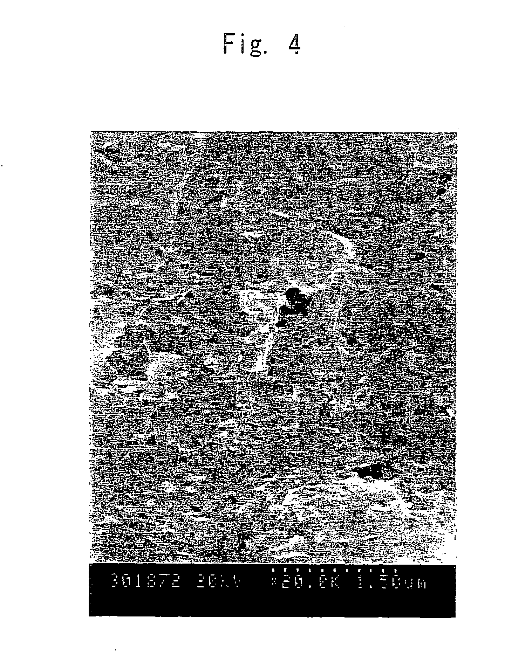

The sepiolite C was coarsely pulverized, pulverized by using the roller mill, and was finely dry-pulverized by using the jet mill. The pulverized product was measured for its properties. The results were as shown in Table 2, the X-ray diffraction image was as shown in Fig. 1 and the SEM photograph was as shown in Fig. 4.

(Example 3)

The attapulgite B was coasely pulverized and was pulverized by using the roller mill. 278 Grams of the pulverized product was dispersed in 2500 ml of water, 300 ml of hydrochloric acid of a concentration of 3% was added dropwise thereto, the temperature was elevated to 60°C, and the treatment was conducted with an acid for three hours (the pH of the slurry after the treatment was 5.75). The product treated with the acid was filtered, washed with water, dried at 110°C, coarsely pulverized, and was finely dry-pulverized by using the jet mill to obtain a thixotropy-imparting agent. The obtained thixotropy-imparting agent was measured for its properties. The results were as shown in Table 2 and the X-ray diffraction image was as shown in Fig. 5.

(Comparative Example 5)

The attapulgite B was coarsely pulverized, pulverized by using the roller mill and was measured for its properties. The results were as shown in Table 2 and the X-ray diffraction image was as shown in Fig. 5.

Table 2

| | Ex. 1 | Comp. Ex. 1 | Ex. 2 | Comp. Ex. 2 | Comp. Ex. 3 | Comp. Ex. 4 | Ex. 3 | Comp. Ex. 5 |
|---|---|---|---|---|---|---|---|---|
| TI (solvent: DOP[*1]) | | | | | | | | |
| $\eta_6$ (mPa·s) | 7330 | 200 | 4120 | (A) | 2470 | 1780 | 7910 | 735 |
| $\eta_{60}$ (mPa·s) | 1366 | 140.6 | 896 | (A) | 562 | 461 | 1571 | 249.2 |
| TI | 5.4 | 1.4 | 4.6 | (A) | 4.4 | 3.9 | 5.0 | 3.0 |
| TI (solvent: water) | | | | | | | | |
| $\eta_6$ (mPa·s) | 562.0 | 817 | 202 | 883 | 39 | 8 | 64 | 60 |
| $\eta_{60}$ (mPa·s) | 65.3 | 175 | 52.7 | 225.7 | 7.2 | 1.1 | 9.9 | 13.5 |
| TI | 8.6 | 4.7 | 3.8 | 3.9 | 5.4 | 7.3 | 6.5 | 4.4 |
| Bulk density (g/ml) | 0.100 | 0.450 | 0.109 | 0.570 | 0.128 | 0.172 | 0.068 | 0.434 |
| Ptcl. size distribution (wt%) | | | | | | | | |
| 1.0 < ptcl. Diameter (μm) ≦ 30 | 88.0 | 90.9 | 73.3 | 80.1 | 96.0 | 83.7 | 77.2 | 45.2 |
| ptcl. Diameter (μm) ≦ 1.0 | 11.1 | 0 | 27.6 | 13.0 | 3.9 | 16.3 | 22.4 | 0.1 |
| Ave. aspect ratio (-) | 8.2 | 14.2 | 8.4 | 13.9 | 7.4 | 5.2 | 8.7 | 24.3 |
| Ave. fiber length (μm) | 0.69 | 1.25 | 0.52 | 1.06 | 0.46 | 0.27 | 0.72 | 20.2 |
| Intensity ratios of peaks[*3] (%) | | | | | | | | |
| 2θ=31° (dolomite) | 2.0 | 2.0 | - | - | 63.7 | 1.0 | - | - |

Table continued

<u>Intensity ratios of peaks<sup>*3</sup> (%)</u>

| | | | | | | | | |
|---|---|---|---|---|---|---|---|---|
| $2\theta=29°$ (calcite) | 6.3 | 6.3 | 27.1 | 27.1 | 6.3 | 29.4 | 21.8 | 97 |

(A): poorly dispersed[*2]

*1: DOP (diethylhexyl phthalate)

*2: Poorly dispersed due to sedimentation of the sample.

*3: Intensity ratios of peaks of when the peaks stemming from the planes (110) of the samples were regarded to be 100%.

**Claims**

1. A thixotropy-imparting agent comprising chain clay mineral particles, **characterized in that** said chain clay mineral particles have:

   a thixotropic index (TI) defined by the following formula,

   $$\mathrm{TI} = \eta_6 / \eta_{60}$$

   wherein $\eta_6$ is a viscosity (at 25°C) of a dispersion solution obtained by dispersing the chain clay mineral particles in a predetermined dispersion medium as measured at a rotational speed of 6 rpm, and $\eta_{60}$ is a viscosity (at 25°C) of the above dispersion solution as measured at a rotational speed of 60 rpm, of not smaller than 4.0 in a dispersion solution obtained by dispersing chain clay mineral particles at a concentration of 7% by weight in diethylhexyl phthalate (DOP) as a dispersing medium and not smaller than 3.0 in a dispersion solution obtained by dispersing chain clay mineral particles at a concentration of 3% by weight in water as a dispersion medium;
   a bulk density of not larger than 0.125 g/ml; and
   a particle size distribution of secondary particles as measured by a laser method, in which particle sizes of larger than 1.0 $\mu$m but not larger than 30 $\mu$m are not less than 70% by weight and particle sizes of not larger than 1.0 $\mu$m are in a range of 5 to 30% by weight.

2. A thixotropy-imparting agent according to claim 1, wherein said chain clay mineral particles have an average aspect ratio of 7.5 to 9.5.

3. A thixotropy-imparting agent according to claim 1, wherein said chain clay mineral particles are such that a primary particle shape thereof has an average fiber length of 0.45 to 0.80 $\mu$m as measured by using an electron microscope.

4. A thixotropy-imparting agent according to claim 1, wherein said chain clay mineral is holmite clay mineral.

5. A thixotropy-imparting agent according to claim 4, wherein said holmite clay mineral is sepiolite or attapulgite.

6. A thixotropy-imparting agent according to claim 5, wherein said holmite clay mineral is sepiolite, and when the peak height stemming from the plane (110) of sepiolite is regarded to be 100%, the peaks stemming from dolomite and calcite have intensity ratios of peaks of not larger than 25% in an X-ray diffraction measurement;

7. A thixotropy-imparting agent according to claim 5, wherein said holmite clay mineral is attapulgite, and when the peak height stemming from the plane (110) of attapulgite is regarded to be 100%, the peak stemming from calcite has an intensity ratio of peak of not larger than 50%.

8. A coating material composition containing a thixotropy-imparting agent of claim 1.

9. An adhesive composition containing a thixotropy-imparting agent of claim 1.

**10.** A resin composition containing a thixotropy-imparting agent of claim 1.

Fig. 1

Fig. 2

Fig. 3

Fig. 4

301872 30kV    x20.0K 1.50um

# Fig. 5

○ : ATTAPULGITE
▼ : CALCITE
× : DOLOMITE

COMP. EX. 5

EX. 3

INTENSITY (Counts)

2 θ (deg)

<div align="center">

**INTERNATIONAL SEARCH REPORT**

</div>

| | International application No. |
|---|---|
| | PCT/JP2004/009612 |

| A. CLASSIFICATION OF SUBJECT MATTER |
|---|
| Int.Cl⁷ C09K3/00, C09D7/12, C09D201/00, C09J11/02, C09J201/00, C08L101/00, C08K3/18 |

According to International Patent Classification (IPC) or to both national classification and IPC

| B. FIELDS SEARCHED |
|---|
| Minimum documentation searched (classification system followed by classification symbols) |
| Int.Cl⁷ C09K3/00, C09D7/12, C09D201/00-201/10, C09J11/02-11/06, C09J201/00-201/10, C08L101/00-101/16, C08K3/18-3/24 |

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 56-118751 A (Takeda Chemical Industries, Ltd.),<br>17 September, 1981 (17.09.81),<br>Claims; page 1, right column, line 8 to page 2, lower left column, line 8; page 3, upper left column, line 16 to page 4, upper right column, line 19<br>(Family: none) | 1-6<br>8-10 |
| Y | JP 11-228653 A (Nippon Polyurethane Industry Co., Ltd.),<br>24 August, 1999 (24.08.99),<br>Claims 1 to 3<br>(Family: none) | 8-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 September, 2004 (28.09.04) | Date of mailing of the international search report<br>26 October, 2004 (26.10.04) |
|---|---|
| Name and mailing address of the ISA/<br>Japanese Patent Office | Authorized officer |
| Facsimile No. | Telephone No. |

Form PCT/ISA/210 (second sheet) (January 2004)

EP 1 666 558 A1

<table>
<tr><td colspan="2" style="text-align:center"><strong>INTERNATIONAL SEARCH REPORT</strong></td><td>International application No.<br>PCT/JP2004/009612</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-338236 A  (Mizusawa Industrial Chemicals, Ltd.), 27 November, 2002 (27.11.02), (Family: none) | 1-10 |
| A | JP 2003-48766 A  (Shin-Etsu Chemical Co., Ltd.), 21 February, 2003 (21.02.03), (Family: none) | 1-10 |
| A | WO 2002/000350 A1  (ITC, INC.), 03 January, 2002 (03.01.02), & US 6444601 B1          & EP 1360012 A1 & JP 2004-508258 A | 1-10 |